# EUROPEAN PATENT APPLICATION

(11) **EP 4 372 646 A1**
(43) Date of publication of application: **22.05.2024**
(21) Application number: 21950098.0
(22) Date of filing: 13.07.2021
(51) Int. Cl.: G06Q 10/08

(54) **INVENTORY MANAGEMENT SYSTEM AND INVENTORY MANAGEMENT METHOD**

(71) Applicant: Hitachi Industrial Equipment Systems Co., Ltd., Tokyo 101-0021 (JP)
(72) Inventor: YOKOMIZO, Hiroaki, Tokyo 101-0021 (JP); TAKAHASHI, Hiroshi, Tokyo 101-0021 (JP); NAKAGAWA, Yuusuke, Tokyo 101-0021 (JP)
(74) Representative: MERH-IP Matias Erny Reichl Hoffmann Patentanwälte PartG mbB
(86) International application number: PCT/JP2021/026303
(87) International publication number: WO 2023/286156

(57) **Abstract**

A manager that manages a stock quantity of consumable items used in each of apparatuses, on a predetermined management aggregation basis, an obtainer that obtains consumable item information pertaining to a consumption degree of the consumable items used in each of the apparatuses, from each of the apparatuses, and a determiner that determines necessity of replacement of any of the consumable items, based on the consumable item information about the consumable item obtained by the obtainer, are provided. Based on actual replacement of the consumable item determined to have the necessity of replacement by the determiner, the manager updates the stock quantity in a management aggregation to which the consumable item belongs.

## Description

### [Technical Field]

The present invention generally relates to stock management for a plurality of apparatuses provided at a production site.

### [Background Art]

Conventionally, a user using apparatuses, such as an inkjet printer (IJP) and a facsimile machine, provided at a production site performs stock management of consumable items, such as ink, and toner, used in the apparatuses, and places an order through telephone, facsimile, email or the like if the stock quantity of each consumable item becomes small. Unfortunately, as the number of apparatuses used at the production site increases, the load of stock management on the user becomes heavy.

To address this, a facsimile machine has been known that detects the remaining amount of an consumable item, such as toner, and makes a call to a preliminarily registered phone number of an order destination and automatically issues an notification about lack of the consumable item if the consumable item has been used up (see Patent Literature 1).

### [Citation List]

### [Patent Literature]

[Patent Literature 1] Japanese Patent Laid-Open No. 1995-87212

### [Summary of Invention]

### [Technical Problem]

At the production site, certain quantities of consumable items are kept in order to accommodate the variation in demand of products and the variation in supply of products. On the other hand, in order to reduce the management cost and the like, such as of storage, movement, stocktake, and maintenance of consumable items, the stock quantities of the consumable items are required to be reduced to the minimum. According to the technique described in Patent Literature 1, the time for replacement of consumable items for each apparatus can be detected, and stock management of the consumable items for the apparatus can be achieved. However, in view of the entire production site, the stock may be held more than necessary.

The present invention has been made in view of the point described above, and is for proposing a stock management system and the like that can appropriately manage the stock quantities of consumable items.

### [Solution to Problem]

To solve such a problem, according to the present invention, a stock management system performing stock management of consumable items used in a plurality of apparatuses provided at a production site, the stock management system includes: a manager that manages a stock quantity of consumable items used in each of the apparatuses, on a predetermined management aggregation basis; an obtainer that obtains consumable item information pertaining to a consumption degree of the consumable items used in each of the apparatuses, from each of the apparatuses; and a determiner that determines necessity of replacement of any of the consumable items, based on the consumable item information about the consumable item obtained by the obtainer, wherein based on actual replacement of the consumable item determined to have the necessity of replacement by the determiner, the manager updates the stock quantity in a management aggregation to which the consumable item belongs.

According to the configuration described above, for example, provided that the predetermined management aggregation is a production line, the stock quantities of consumable items can be managed on a production line basis. Consequently, in a case in which a plurality of apparatuses of the same type are arranged on the production line, the consumable items can be used among the apparatuses in a shared manner, thus allowing reduction in stock quantities in comparison with a case of managing the stock quantities on an apparatus-by-apparatus basis. Alternatively, for example, provided that the predetermined management aggregation is a factory, the stock quantities of consumable items can be managed on a factory-by-factory basis. Consequently, in a case in which a plurality of apparatuses of the same type are arranged in the factory, the consumable items can be used among the apparatuses in a shared manner, thus allowing reduction in stock quantities in comparison with cases of managing the stock quantities on an apparatus-by-apparatus basis or a production line basis. For example, in view of situations of manufacturing lines at multiple customers, stock is managed as virtual stock on a cloud. Optimization knowledge of stock management, and compliance to legislative regulations concerning industrial ink and the like required to be managed as an organic solvent can be reflected in a cross-sectional perspective.

### [Advantageous Effect of Invention]

The present invention can achieve a stock management system with high usability.

### [Brief Description of Drawings]

[Figure 1] Figure 1 shows an example of a configuration pertaining to a stock management system according to a first embodiment.
[Figure 2] Figure 2 shows an example of a server apparatus according to the first embodiment.
[Figure 3] Figure 3 shows an apparatus according to the first embodiment.
[Figure 4] Figure 4 shows an example of consumable item management information according to the first embodiment.
[Figure 5] Figure 5 shows an example of stock management information according to the first embodiment.
[Figure 6] Figure 6 shows an example of an alarm process according to the first embodiment.
[Figure 7] Figure 7 shows an example of a process during replacement according to the first embodiment.
[Figure 8] Figure 8 shows an example of a process during order placement according to the first embodiment.
[Figure 9] Figure 9 shows an example of a setting screen according to the first embodiment.
[Figure 10] Figure 10 shows an example of a confirmation screen according to the first embodiment.

### [Description of Embodiment]

### (I) First embodiment

Hereinafter, an embodiment of the present invention is described. Note that the present invention is not limited to the embodiment.

In recent years, apparatuses that support IoT (Internet of Things) have been introduced, which allows the states of the apparatuses to be monitored. According to the stock management system of this embodiment, the stock quantities of consumable items are managed in a cloud to which individual apparatuses are coupled, instead of the apparatuses managing the stock quantities of their consumable items. Note that the consumable items may be items that would be physically exhausted by use of the apparatuses, or items that would become unsuited to use for the apparatuses.

More specifically, this stock management system monitors the state of each apparatus, and manages the stock quantity of each consumable item on a predetermined management aggregation basis. The predetermined management aggregation is a predetermined management unit (management group), such as a factory, a facility, a production line, a type of apparatuses, or objects covered by a contract. For example, in this stock management system, during replacement of each consumable item, decrement of the stock quantity by one is detected based on a fact that an RF (Radio Frequency) tag attached to a piece of the consumable item is read. For example, in this stock management system, when it is detected that the stock quantity of each consumable item becomes small in the predetermined management group, an order for the consumable item is placed so as to achieve the maximum stock quantity.

According to the configuration described above, the stock quantities are managed on the predetermined management group basis. Consequently, the consumable items can be used in a shared manner in the predetermined management group, thus allowing the stock quantities to be reduced. An order for the number of pieces of each consumable item required in the predetermined management group is automatically placed. Accordingly, for example, in comparison with a case in which a user identifies an alarm issued by an apparatus having detected that the remaining amount of the consumable item becomes small, accesses the Internet, and places an order for the consumable item every time such detection occurs, the load of stock management on the user can be reduced. By automatically placing an order for each consumable item, use of third-party items can be avoided, and the installation rate of genuine products can be increased. Consequently, a situation where the apparatuses do not normally operate can be avoided.

Next, an embodiment of the present invention is described based on the drawings. The following description and the drawings are examples for describing the present invention, and components may be appropriately omitted and simplified to clarify the description. The present invention can be implemented in various other forms. Unless specifically limited, each configuration element may be singular or plural. Note that in the following description, the same element in the drawings assigned the same numerals, and the description is appropriately omitted.

In this Description and the like, representation, such as of "first", "second", and "third", is added to identify a configuration element, and does not necessarily limit the number or order. The numerals for identifying the configuration elements are used on a context-by-context basis. Numerals used in one context does not necessarily denote the same configuration elements in another context. A configuration element identified by a certain numeral is not prevented from also having the function of a configuration element identified by another numeral.

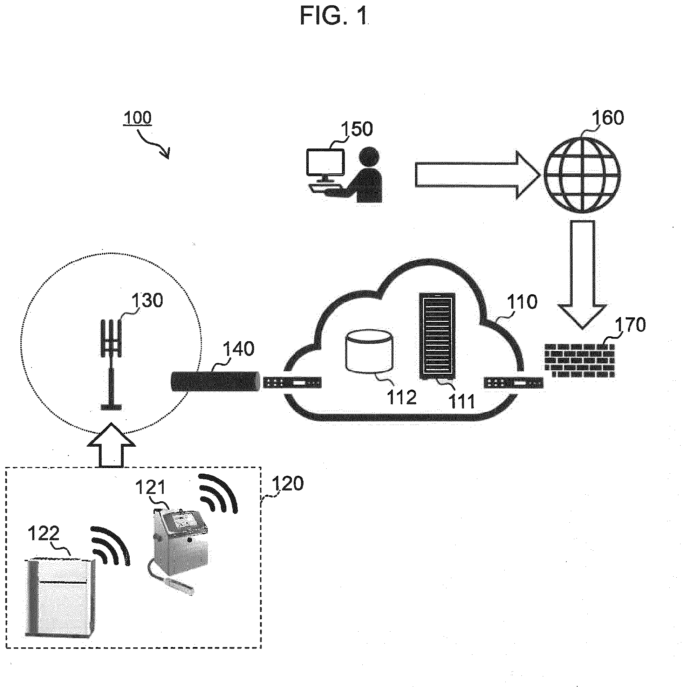

In Figure 1, reference numeral 100 denotes a stock management system according to a first embodiment as a whole.

In the stock management system, one or more server apparatuses 111, and one or more storage apparatuses 112 are provided in a cloud 110. In the stock management system 100, one or more apparatuses 120 are installed at a production site, such as a factory. The apparatus 120 transmits information pertaining to the apparatus 120 to the cloud 110 via a mobile network 130 and a dedicated line 140 having high security. The information pertaining to the apparatus 120 includes consumable item information pertaining to the consumption degree of a consumable item for the apparatus 120, and operation information indicating the operation state of the apparatus 120. Note that in the following description, an IJP 121 and a compressor 122 are exemplified as the apparatuses 120 and description is made. Alternatively, the apparatuses may be other industrial apparatuses that require management of the stock quantity of each consumable item.

In the cloud 110, the server apparatus 111 stores the information pertaining to the apparatus 120 in the storage apparatus 112, and reads the information from the storage apparatus 112 as required. The server apparatus 111 manages the stock quantity of each consumable item, based on the information pertaining to the apparatus 120, and transmits order information for placing an order for the consumable item so as to prevent the consumable item from coming into short supply, to a consumable item shipping system, not shown. The order information includes an order number, an order date, order content, an order destination, a unit price, a quantity, a payment condition, a deadline, a consumption tax amount, and a total amount. Note that for example, when the consumable item shipping system receives the order information, an operator of the consumable item shipping system ships the consumable item to the delivery destination according to the order information.

In the stock management system 100, a user terminal 150 obtains the information pertaining to the apparatus 120 from the cloud 110 via the Internet 160 and a firewall 170 in response to an operation by the user, and displays the stock situation of the consumable item, the operation state of the apparatus 120 and the like. Note that the user terminal 150 may be a mobile terminal, a tablet terminal, a personal computer or the like.

In the following description, a case in which a plurality of production lines are provided in one factory, and a plurality of apparatuses 120 are provided on each production line is described as an example.

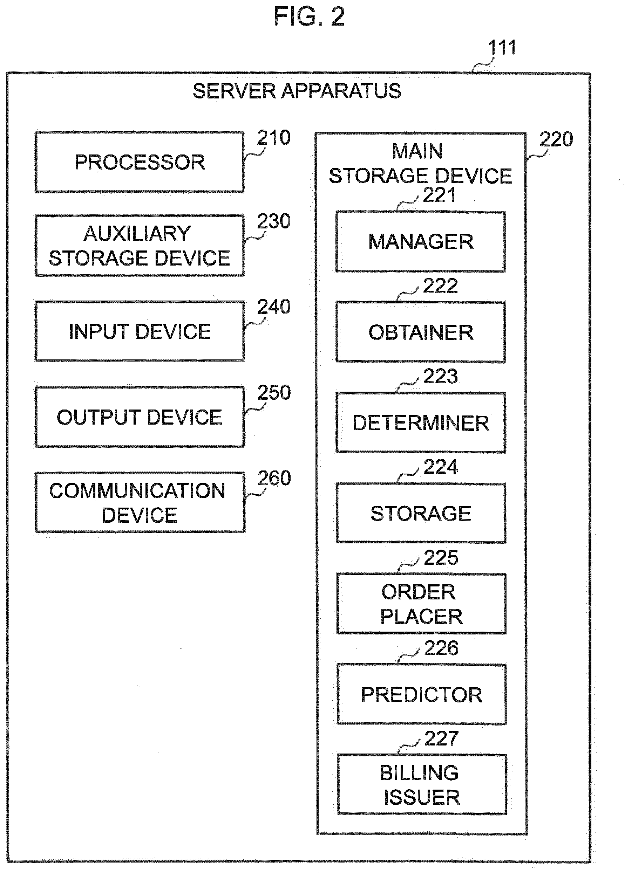

Figure 2 shows an example of the server apparatus 111. The server apparatus 111 includes a processor 210, a main storage device 220, an auxiliary storage device 230, an input device 240, an output device 250, and a communication device 260.

The processor 210 is a device that performs a computation process. The processor 210 may be, for example, a CPU (Central Processing Unit), an MPU (Micro Processing Unit), a GPU (Graphics Processing Unit), an AI (Artificial Intelligence) chip, etc.

The main storage device 220 is a device that stores programs, data and the like. The main storage device 220 may be, for example, a ROM (Read Only Memory), a RAM (Random Access Memory), etc. The ROM may be an SRAM (Static Random Access Memory), an NVRAM (Non Volatile RAM), a mask ROM (Mask Read Only Memory), a PROM (Programmable ROM), etc. The RAM may be a DRAM (Dynamic Random Access Memory) etc.

The auxiliary storage device 230 may be a hard disk drive, a flash memory, an SSD (Solid State Drive), an optical storage device, etc. The optical storage device may be, a CD (Compact Disc), a DVD (Digital Versatile Disc), etc. The programs, data and the like stored in the auxiliary storage device 230 are read into the main storage device 220 as needed. Note that the storage apparatus 112 may be provided as the auxiliary storage device 230.

The input device 240 is a user interface for accepting information from the user. The input device 240 may be, for example, a keyboard, a mouse, a card reader, a touch panel, etc.

The output device 250 is a user interface for outputting various types of information (display output, audio output, printing output, etc.) The output device 250 may be, for example, a display device that visualizes various types of information, an audio output device (speaker), a printer, etc. The display device may be an LCD (Liquid Crystal Display), a graphic card, etc.

The communication device 260 is a communication interface for communication with another apparatus via a communication medium. The communication device 260 may be, for example, an NIC (Network Interface Card), a wireless communication module, a USB (Universal Serial Interface) module, a serial communication module, etc. The communication device 260 can also function as an input device that receives information from a communicably coupled another apparatus. The communication device 260 can also function as an output device that transmits information to a communicably coupled another apparatus.

The functions of the server apparatus 111 (a manager 221, an obtainer 222, a determiner 223, a storage 224, an order placer 225, a predictor 226, a billing issuer 227, etc.) may be achieved by, for example, the processor 210 reading the programs stored in the auxiliary storage device 230 into the main storage device 220 and executing the programs (software, such as a virtual machine, and a container), by hardware, such as a dedicated circuit, or by combination of software and hardware. Note that one of the functions of the server apparatus 111 may be divided into multiple functions, or multiple functions may be integrated into one function. Some of the functions of the server apparatus 111 may be provided as other functions, or included in another function. Some of the functions of the server apparatus 111 may be achieved by another server apparatus 111 that can communicate with the server apparatus 111.

The manager 221 manages the stock quantity of each consumable item used in each apparatus 120, on a management group basis. For example, the management group may be set according to a contract for an automatic order placement service between the user (system user) and the operator (system provider), or appropriately set by the user. The obtainer 222 obtains consumable item information pertaining to the consumption degree of the consumable items used in each of the apparatuses 120, from each of the apparatuses 120. The consumable item information includes information indicating the usage start date of the consumable item, information indicating the remaining amount of the consumable item, and information indicating the stock quantity of the consumable item. The consumable item information is transmitted from the apparatus 120 or input by the user at predetermined timing. For example, the predetermined timing may be periodical, a predetermined time point, timing of replacement of the consumable item, timing of setting a management group for the consumable item, or the like. The determiner 223 determines whether the consumable item is required to be replaced or not, based on the consumable item information about the consumable item obtained by the obtainer 222. For example, the determiner 223 performs at least one of determination based on the usage start date of the consumable item, determination based on the remaining amount of the consumable item, and determination based on the history of the stock quantity of the consumable item.

The storage 224 stores information indicating the order quantity of the consumable item, and information indicating the minimum stock quantity of the consumable item, in the storage apparatus (the storage apparatus 112, the auxiliary storage device 230, etc.) that can communicate with the server apparatus 111, on the management group basis. The storage 224 may store the information indicating the order date of the consumable item, in the storage apparatus that can communicate with the server apparatus 111, on the management group basis. The storage 224 may store the consumable item information obtained by the obtainer 222, in the storage apparatus that can communicate with the server apparatus 111.

The order placer 225 performs an order placement process of transmitting order information for placing an order, with the order quantity of the consumable item, for the consumable item having a quantity smaller than the minimum stock quantity, to a terminal at the order destination (e.g., the consumable item shipping system), based on the information stored in the storage 224. The order placer 225 may perform the order placement process for the consumable item, based on the time at which the consumable item is required to be replaced predicted by the predictor 226. The predictor 226 predicts a time at which the consumable item is required to be replaced, based on the consumable item information about the consumable item stored in the storage 224. The billing issuer 227 performs a billing process of transmitting billing information for charging a payment for the consumable item, to the user terminal 150 of the user who is to receive the consumable item for which the order placement process has been performed by the order placer 225, or to the terminal at the billing destination (e.g., a consumable item billing system) preliminarily registered with respect to the user.

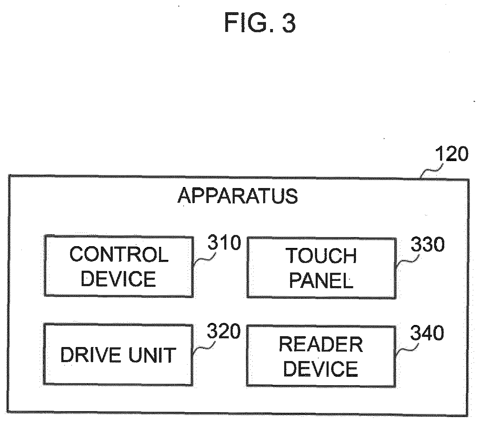

Figure 3 shows an example of the apparatus 120. The apparatus 120 includes a control device 310, a drive unit 320, a touch panel 330, and a reader device 340.

The control device 310 controls the drive unit 320. The control device 310 is a computer that includes a processor, a main storage device, and a communication device. The drive unit 320 is a printer, an air compressor or the like, and is in charge of predetermined production on the production line in the factory. The touch panel 330 accepts information pertaining to setting of the apparatus 120, and information pertaining to placement of an order for the consumable item. The reader device 340 reads information on the RF tag attached to the consumable item. Note that the apparatus 120 may be provided with neither the touch panel 330 nor the reader device 340, or is not necessarily provided with any one of them.

Here, a case in which the apparatus 120 is the IJP 121 is described. The printing scheme in the IJP 121 may be any of a continuous type, an on-demand type (a piezo scheme, a thermal scheme, a valve scheme) and the like. Any scheme may be adopted. Here, the continuous type in which ink is circulated, and a required amount of atomized ink is used as required is exemplified and description is made.

For example, the IJP 121 divides each character into pixels in a dot-matrix manner, charges ink particles with a voltage proportional to position information on each pixel, and deflects charged ink particles with a static electric field so that the particles can reach a print medium, thus achieving printing.

More specifically, the IJP 121 includes an ink bottle, an intensifier liquid bottle, a supply pump, nozzles, electrostrictive elements, charge electrodes, a gutter, a collection pump. The IJP 121 pressurizes ink in the ink bottle by the supply pump, and ejects the ink through the nozzles in a liquid column manner. The IJP 121 turns a liquid column into an ink particle having a constant size by vibrations of the electrostrictive element, and charges each of ink particles to have a voltage corresponding to the print dot position information on a particle-by-particle basis. The charged ink particle is deflected to an extent in accordance with the amount of charge when the particle passes between the deflection electrodes, and reaches the print medium. Ink particles that are not used for printing are captured by the gutter, and collected by the collection pump to the ink bottle. The intensifier liquid bottle supplies intensifier liquid into the ink bottle so as to keep the concentration. Note that the IJP 121 may include a subbottle that supplies ink into the ink bottle so that the amount of ink to be used can be kept constant.

The IJP 121 described above uses two types of liquid that are ink (ink bottle) and intensifier liquid (intensifier liquid bottle), as consumable items. Even while printing is not performed, some highly volatile components are lost from the ink, and the concentration becomes high. Possible increase in concentration of the ink causes reduction in print quality, and malfunctions of the IJP 121. Accordingly, it is required to refill the lost components, and maintain the state of the ink to be optimal. The intensifier liquid is liquid to be mixed with the ink in order to adjust the concentration of the ink, and refill the insufficient components. The constituent components vary depending on the types. The ink and the intensifier liquid are kept at a lockable and well-ventilated place. For example, if the ink and the intensifier liquid fall into the category IV hazardous materials in the Fire Service Act, storage and handling are required to conform to the standards in the Fire Service Act. The ink and intensifier liquid each have the expiration date for open (expiration date for use). Information on the expiration date for use may be included in the information on the RF tag, or the expiration date for use may be indicated on a label pasted on the bottle, or both measures may be taken. Note that the bottle may be a tank, a cartridge or the like.

The consumable items for the IJP 121 include not only the ink and the intensifier liquid but also filters and O-rings provided for piping, etc.

Next, a case in which the apparatus 120 is the compressor 122 is described. The schemes of compressing air by the compressor 122 include a volume type (a screw-type for compressing by rotating rotors, a reciprocating type for compressing by reciprocal movement of a piston, etc.), and a centrifugal type (a turbo-type for compressing by the centrifugal force using rotation of gears). Here, the screw-type is exemplified and description is made.

The compressor 122 aspirates air through a suction port of the rotors, rotates the rotors, and disengages the mesh of gears, thus aspirating air fully into a gear teeth space. Furthermore, the compressor 122 rotates the rotors. When the air is blocked by a wall of a casing, the compressor 122 completes the aspiration. Next, the compressor 122 compresses air confined between the gear teeth space and the casing by the mesh of the rotors. Next, the compressor 122 moves the air in the axial direction as the rotors rotate, while further compressing the air between the gear teeth space and the casing, thus making the air have a predetermined pressure at a discharge port. The compressor 122 discharges the compressed air through a nozzle formed in the casing on the discharge side.

Note that the screw type includes an oil-free type, and an oil-lubricating type. According to the oil-free type, the rotors rotate without contact with each other at the mesh of the rotors. According to the oil-lubricating type, the rotors rotate with the rotors being in contact with each other.

The consumable items for the compressor 122 described above include not only a filter for removing dust, oil for preventing breakage due to contact between metal components, and air leakage through a gap, but also bearings, an oil filter, an oil separator element, etc.

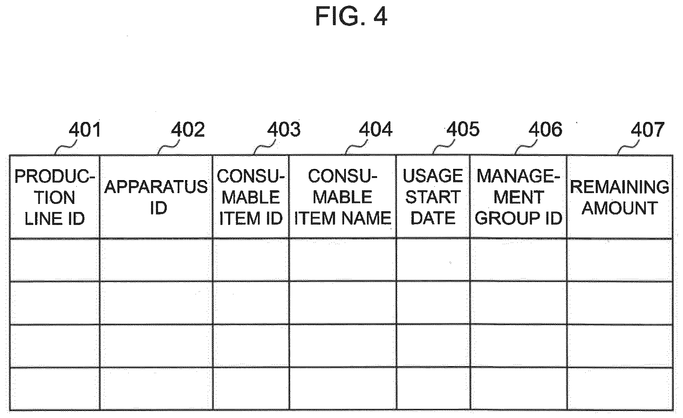

Figure 4 shows an example of consumable item management information (consumable item management table 400. The consumable item management information is information for managing the consumable item information. The consumable item management information is stored in the storage apparatus 112, for example.

The consumable item management table 400 stores records that include values of multiple items indicating the consumable item management information. More specifically, the consumable item management table 400 stores records with which information on a production line ID 401, an apparatus ID 402, a consumable item ID 403, a consumable item name 404, a usage start date 405, a management group ID 406, and a remaining amount 407 is associated.

The production line ID 401 is an item for indicating information for identifying a production line in the factory. The apparatus ID 402 is an item for indicating information for identifying the apparatus 120 provided on the production line. The consumable item ID 403 is an item for indicating information for identifying the consumable item used in the apparatus 120. The consumable item name 404 is an item for indicating information on the name of the consumable item. The usage start date 405 is an item for indicating information on the time and date of start of using the consumable item. The management group ID 406 is an item for indicating information for identifying the management group to which the consumable item belongs. The remaining amount 407 is an item for indicating information on the remaining amount of the consumable item.

Note that the information stored in the consumable item management table 400 is not limited to the information described above. For example, the consumable item management table 400 may be provided with an item indicating information for identifying the factory (factory ID), and an item indicating information for identifying the machine type of the apparatus 120 (machine type ID).

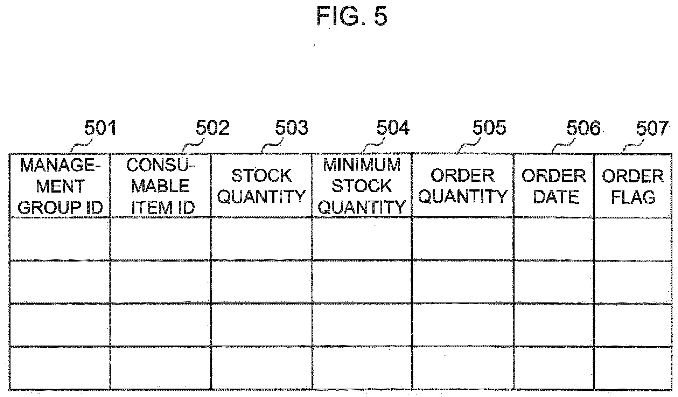

Figure 5 shows an example of the stock management information (stock management table 500). The stock management information is information for performing stock management of the consumable item. The stock management information is stored in the storage apparatus 112, for example.

The stock management table 500 stores records that include values of multiple items indicating the stock management information. More specifically, the stock management table 500 stores records with which information on a management group ID 501, a consumable item ID 502, a stock quantity 503, a minimum stock quantity 504, an order quantity 505, an order date 506, and an order flag 507 is associated.

The management group ID 501 is an item for indicating information for identifying the preset management group. The consumable item ID 502 is an item indicating information for identifying the consumable item that belongs to the management group. The stock quantity 503 is an item indicating information on the stock quantity of the consumable item. The minimum stock quantity 504 is an item indicating information on the minimum stock quantity of the consumable item. The order quantity 505 is an item indicating information on the order quantity of the consumable item. Preferably, the order quantity is set so that the sum of the minimum stock quantity and the order quantity can be a required minimum stock quantity to be stored (maximum stock quantity). The maximum stock quantity is a quantity that minimizes reduction in quality of the consumable item, and is the minimum quantity that can satisfy a quantity required for production. The order date 506 is an item indicating information on the order date of the consumable item. The order date to be set may be a preliminarily designated date (e.g., the first day of each month), or appropriate time (a date on which supply of the consumable item becomes necessary). The order flag 507 is an item indicating information on whether an order for the consumable item is required to be placed or not.

Note that the information stored in the stock management table 500 is not limited to the information described above. For example, information on a delivery destination, information on the billing destination and the like may be registered and stored in the stock management table 500. In addition, the information on the delivery destination may be information indicating a predetermined address, or information indicating an address individually designated by the user. The information on the billing destination may be information indicating a predetermined terminal (e.g., the user terminal 150), or information indicating a terminal individually designated by the user (e.g., the consumable item billing system, a dealership, a distributor, etc.).

The stock management table 500 may be provided with an item indicating information on a shipping date on which the consumable item is scheduled to be shipped, in addition to or instead of the order date 506.

In the stock management system 100, only if the stock quantity of each consumable item provided on the management group basis is equal to or smaller than the minimum stock quantity, the order placement process for the order quantity of the consumable item is performed on the order date. Note that in the stock management system 100, when the stock quantity of each consumable item provided on the management group basis is equal to or smaller than the minimum stock quantity, the order placement process for the consumable item can be performed so as to ship the order quantity of the consumable item on the shipping date.

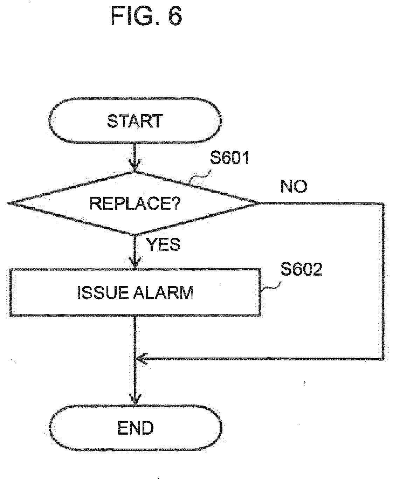

Figure 6 shows an example of an alarm process. The alarm process is performed at predetermined timing. The predetermined timing may be a preliminarily designated time point, periodical, timing designated by the user, or other timing.

Processes in steps S601 and S602 are performed with respect to each consumable item (e.g., the record of the consumable item management table 400) for the apparatus 120 provided in the factory.

In step S601, the server apparatus 111 determines whether the processing-target consumable item is required to be replaced or not. In a case in which the server apparatus 111 determines that the processing-target consumable item is required to be replaced, the server apparatus 111 transfers the processing to step S602. In a case in which the server apparatus 111 determines that the processing-target consumable item is not required to be replaced, the server apparatus 111 transfers the processing target to the next consumable item and performs the process of step S601 if there is an unprocessed consumable item, and finishes the alarm process if there is no unprocessed consumable item.

For example, with reference to the processing target record on the consumable item management table 400, the server apparatus 111 determines that the processing-target consumable item is required to be replaced if determining that a predetermined time period elapses (falling below an estimated replacement time period) based on the current time and date and the time and date of the usage start date 405.

In step S602, the server apparatus 111 issues an alarm. For example, the server apparatus 111 transmits information (alarm information) on a prompt for replacement of the processing-target consumable item, to the apparatus 120 where the processing-target consumable item is required to be replaced. The apparatus 120 having received the alarm information displays the alarm information on the touch panel 330.

For example, alarm information "replace filters" is an alarm indicating "printing can still be continued but filter replacement will be required in a short while". If the alarm is left unacknowledged, an abnormality occurs, and the IJP 121 stops. If the alarm information is displayed, the consumable item is replaced by the user before an abnormality occurs.

Note that the alarm process is not limited to that in the content described above. In step S601, for example, in a case in which the consumable item is ink, the server apparatus 111 may receive, from the IJP 121, the consumable item information that includes information indicating the remaining amount of ink at predetermined timing, and determine that the ink bottle is required to be replaced if determining that the remaining amount of ink falls below a threshold. In a case in which the consumable item is the filter of the compressor 122, the server apparatus 111 may receive, from the compressor 122, information indicating the aspiration pressure at the filter at predetermined timing, and determine that the filter is required to be replaced if determining that the aspiration pressure falls below a threshold.

For example, in step S602, the server apparatus 111 may transmit the alarm information to the user terminal 150 in addition to or instead of the apparatus 120.

The user having confirmed the alarm information replaces the consumable item determined to be replaced. For example, when the user replaces the consumable item (first piece of the consumable item) of the apparatus 120 where the alarm information is displayed, they read information stored on the RF tag attached to the consumable item (second piece of the consumable item) using the reader device 340. The reader device 340 transmits the read information to the control device 310, and the control device 310 generates replacement information, based on the transmitted information, and transmits the generated information to the server apparatus 111. The replacement information includes information indicating the set second piece of the consumable item (e.g., the consumable item ID), information indicating the apparatus 120 where the consumable item is set (e.g., the apparatus ID), information indicating the production line provided with the apparatus 120 (e.g., the production line ID), and information indicating the time and date of setting the consumable item (e.g., the usage start date). Note that the entire or part of the replacement information may be input by the user.

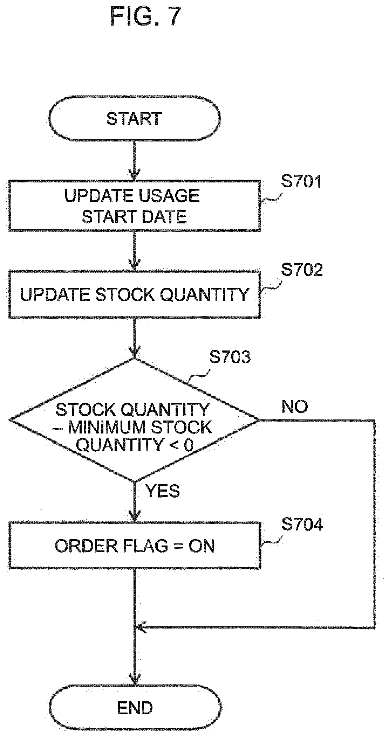

Figure 7 shows an example of a process during replacement. The process during replacement is performed when the server apparatus 111 receives, from the apparatus 120, the replacement information indicating that the consumable item has been actually replaced.

In step S701, the server apparatus 111 updates the usage start date of the newly replaced consumable item (processing-target consumable item). For example, the server apparatus 111 refers to the consumable item management table 400, identifies the record that matches the production line ID, the apparatus ID, and the consumable item ID included in the replacement information, and stores the usage start date included in the replacement information, in the usage start date 405 of the identified record.

In step S702, the server apparatus 111 updates the stock quantity of the processing-target consumable item. For example, the server apparatus 111 obtains the value (management group ID) of the management group ID 406 of the record identified in step S701, refers to the stock management table 500, identifies the record where the obtained management group ID matches the consumable item ID included in the replacement information, and decrements, by "1", the value of the stock quantity 503 of the identified record.

In step S703, the server apparatus 111 determines whether a value obtained by subtracting the minimum stock quantity from the stock quantity of the processing-target consumable item is smaller than zero (negative) or not. More specifically, the server apparatus 111 determines whether a value obtained by subtracting the value of the minimum stock quantity 504 of the record identified in step S702 from the value of the stock quantity 503 of this record is negative or not. If the value obtained by subtracting the minimum stock quantity from the stock quantity is negative, the server apparatus 111 transfers the processing to step S704. If the value obtained by subtracting the minimum stock quantity from the stock quantity is not negative, the process during replacement is finished.

In step S704, the server apparatus 111 turns on the order flag of the processing-target consumable item, and finishes the process during replacement. For example, the server apparatus 111 turns on the order flag 507 of the record identified in step S702.

Note that the process during replacement is not limited to that in the content described above. For example, the server apparatus 111 may perform a process of storing the order date, in addition to steps S701 to S704. More specifically, the server apparatus 111 accumulates the consumable item information (the time and date of obtaining the remaining amount and this remaining amount, the time and date of updating the stock quantity and this stock quantity, the operation time period of the apparatus 120, etc.), and predicts the time and date when the consumable item has been used up, based on the rate of decrease of the processing-target consumable item (e.g., single regression analysis). In this case, the server apparatus 111 may calculate the number of days from the start to end of use of the consumable item (consumable item replacement cycle), calculate the number of pieces of the consumable item required until the order date is reached, and store the record identified in step S702 in the order date 506 if the value obtained by subtracting the calculated number from the stock quantity of the consumable item.

Here, the prediction of the time and date is not limited to that by the method based on an achieved amount of use of the consumable item (history information on the remaining amount, history information on the stock quantity, the operation time period of the apparatus 120, etc.). Alternatively, the prediction may be performed based on a scheduled amount of use of the consumable item (e.g., a production plan on the next month input by the user), or performed based on both the achieved amount of use of the consumable item and the scheduled amount of use of the consumable item. In a case in which the consumable item is ink or intensifier liquid, the temperature and humidity are accumulated, and the time and date is predicted in consideration of the temperature and humidity, since the amount of moisture evaporation varies depending on the temperature and humidity.

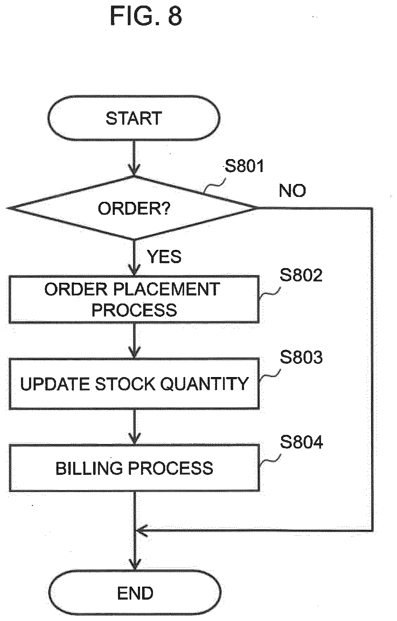

Figure 8 shows an example of a process during order placement. The process during order placement is performed at predetermined timing. The predetermined timing may be a preliminarily designated time point, periodical, timing designated by the user, or other timing.

Processes in steps S801 to S804 are performed with respect to each consumable item (e.g., the record of the stock management table 500) in the management group.

In step S801, the server apparatus 111 determines whether to place an order for the consumable item of the processing-target record (processing-target consumable item) or not. In a case in which the server apparatus 111 determines to place an order for the processing-target consumable item, the server apparatus 111 transfers the processing to step S802. In a case in which the server apparatus 111 determines not to place an order for the processing-target consumable item, the server apparatus 111 transfers the processing target to the next consumable item and performs the process of step S801 if there is an unprocessed consumable item, and finishes the process during order placement if there is no unprocessed consumable item.

For example, the server apparatus 111 refers to the stock management table 500, and obtains the value of the order date 506 and the value of the order flag 507 of the processing target record. If the value of the order date 506 corresponds to the current date, and the value of the order flag 507 is on, the server apparatus 111 determines to place an order for the processing-target consumable item.

In step S802, the server apparatus 111 performs the order placement process. For example, the server apparatus 111 refers to the stock management table 500, generates the order information, and transmits the generated order information to the consumable item shipping system. The order information includes the value of the consumable item ID 502 of the processing target record, and the value (order quantity) of the processing target record.

In step S803, the server apparatus 111 updates the stock quantity of the processing-target consumable item. For example, the server apparatus 111 refers to the stock management table 500, and adds the order quantity to the value of the stock quantity 503 of the processing target record.

In step S804, the server apparatus 111 performs the billing process. For example, the server apparatus 111 generates the billing information, and transmits the generated billing information to the consumable item billing system. The billing information includes the value of the consumable item ID 502 of the processing target record, and the value (order quantity) of the processing target record.

Note that if the server apparatus 111 performs the processes of steps S801 to S804 for all the consumable items in the management group or performs the processes of steps S801 to S804 for all the consumable items in the factory, the server apparatus 111 may transmit the order information to the consumable item shipping system, update the stock quantities of the consumable items, and transmit the billing information to the consumable item billing system. Note that upon receipt of the order information, the consumable item shipping system ships the consumable item to the delivery destination according to the order information. Upon receipt of the billing information, the consumable item billing system charges the billing destination, such as the dealership or the distributor, according to the billing information.

Note that the process during order placement is not limited to that in the content described above. For example, the server apparatus 111 transmits an order screen (an example of instruction information) for an instruction for whether to place an order for the consumable item having a stock quantity smaller than the minimum stock quantity, to the apparatus 120 (or the user terminal 150) pertaining to the consumable item. The touch panel 330 of the apparatus 120 displays the order screen, and transmits information for placing an order of the consumable item (the consumable item ID, the order quantity, etc.) to the server apparatus 111 if accepting an input for an instruction for placing the order of the consumable item. Upon receipt of the information for placing the order of the consumable item, the server apparatus 111 performs the order placement process for the consumable item.

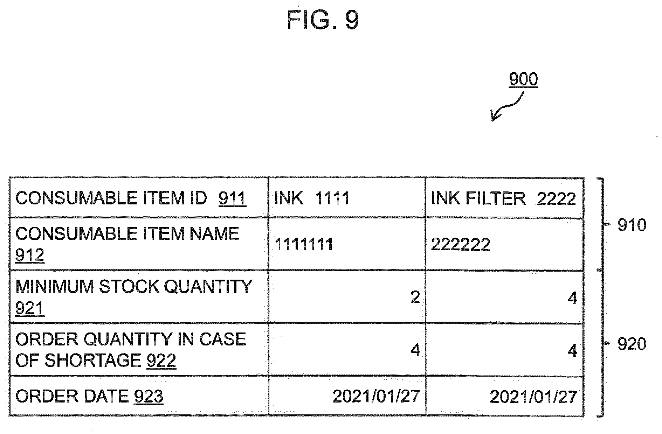

Figure 9 shows an example of a setting screen (setting screen 900). The setting screen 900 is generated by the server apparatus 111 in response to an operation by the user through the touch panel 330 of the apparatus 120, and is displayed on the touch panel 330. Note that the setting screen may be displayed on the user terminal 150 or a terminal of the system provider, not shown.

The setting screen 900 shows an example of a setting screen of one management group. The setting screen 900 is provided with a display area 910 for displaying information for identifying the consumable item, and an input area 920 for receiving an input of setting of the consumable item, with respect to each consumable item required in the management group. The display area 910 includes a consumable item ID display area 911, and a consumable item name display area 912. In the consumable item ID display area 911, the consumable item ID is displayed. In the consumable item name display area 912, the consumable item name is displayed.

The input area 920 includes a minimum stock quantity input area 921, an order quantity input area 922, and an order date input area 923. In the minimum stock quantity input area 921, the minimum stock quantity is input. The input minimum stock quantity is set in the minimum stock quantity 504 of the stock management table 500. In the order quantity input area 922, the order quantity is input. The input order quantity is set in the order quantity 505 of the stock management table 500. In the order date input area 923, the order date is input. The input order date is set in the order date 506 of the stock management table 500.

As described above, the setting screen 900 allows the user to set the accepted stock quantity and timing of placing an order, with respect to each management group (the factory, the production line, the machine type, etc.). Note that the server apparatus 111 recommends the combination between the order quantity and the order date that is optimal for management, based on prediction of the time and date when the consumable item has been used up.

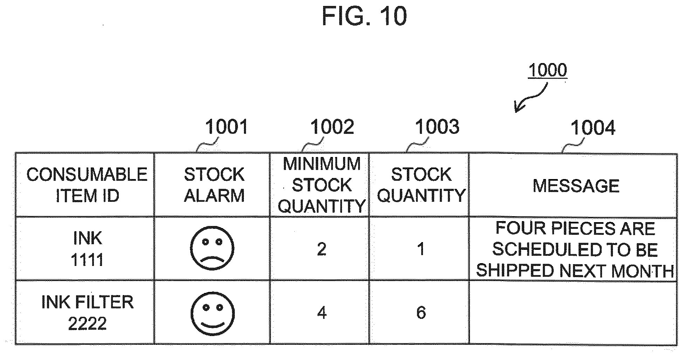

Figure 10 shows an example of a confirmation screen (confirmation screen 1000). The confirmation screen 1000 is generated by the server apparatus 111 in response to an operation by the user from the user terminal 150, and is displayed on the user terminal 150. Note that the confirmation screen may be displayed on the touch panel 330 of the apparatus 120 or the terminal of the system provider, not shown.

The confirmation screen 1000 shows an example of the confirmation screen of one management group. On the confirmation screen 1000, with respect to each consumable item required in the management group, information on a stock alarm 1001, a minimum stock quantity 1002, a stock quantity 1003, and a message 1004 is displayed.

In the stock alarm 1001, information indicating whether the current stock quantity of the consumable item in the management group is falls below the minimum stock quantity of the consumable item or not is displayed. In the minimum stock quantity 1002, information on the minimum stock quantity is displayed. In the stock quantity 1003, information on the current stock quantity of the consumable item is displayed. In the message 1004, information pertaining to the stock quantity of the consumable item is displayed.

Alternatively, it may be configured so that a screen allowing confirmation of the state of each consumable item is displayed on the user terminal 150. For example, each apparatus 120 transmits the quantity of the consumable item (e.g., the remaining amount) to the server apparatus 111. The server apparatus 111 generates the screen in response to an operation by the user from the user terminal 150. With reference to the screen, the user can confirm that the amount of consumable item decreases, and determine that the consumable item is required to be replaced if an indicator indicating the amount of the consumable item reaches empty. If a use duration has elapsed even with a certain remaining amount being present, the information is displayed on the screen.

According to this embodiment, the usability of the stock management of consumable items can be improved.

### (II) Supplement

The embodiment described above includes, for example, the following content.

In the embodiment described above, the cases of applying the present invention to the stock management system is described. However, the present invention is not limited to such cases, and is widely applicable to various other systems, apparatuses, methods, and programs.

In the embodiments described above, part of or the entire program may be installed from a program source into an apparatus, such as a computer, achieving the server apparatus 111. The program source may be, for example, a program distributing server coupled via a network, or a computer-readable recording medium (e.g., a non-transitory recording medium). In the description described above, two or more programs may be achieved as one program, or one program may be achieved as two or more programs.

In the embodiment described above, the configuration of each table is only an example. One table may be divided into two or more tables. All or some of two or more tables may constitute one table.

In the embodiment described above, for the sake of convenience of description, information pertaining to the stock management system is described using the tables. However, the data structure is not necessarily limited to that of the table. The information pertaining to the stock management system may be represented in a data structure other than that of the table, such as the XML (Extensible Markup Language), YAML (YAML Ain't a Markup Language), a hash table, or a tree structure.

In the embodiment described above, the screens depicted or illustrated are only examples, and may be those with any design only if the information to be accepted is the same.

In the embodiment described above, the screens depicted or illustrated are only examples, and may be those with any design only if presented information is the same.

In the embodiment described above, output of information is not limited to displaying on a display. The output of information may be audio output through a speaker, output to a file, printing on a paper medium or the like through a printer, or projection on a screen through a projector, etc., or that in another form.

In the above description, the information that is in the programs achieving the functions, in tables, in files and the like may be in any of storage devices, such as a memory, a hard disk, and an SSD (Solid State Drive), or any of recording media, such as an IC card, an SD card, and a DVD.

The embodiment described above has, for example, the following characteristic configurations.
(1) A stock management system (e.g., the stock management system 100) performing stock management of consumable items (e.g., ink, intensifier liquid, a filter, an O-ring, oil, bearings, an oil filter, an oil separator element, etc.) used in a plurality of apparatuses (e.g., the apparatus 120, the IJP 121, and the compressor 122) provided at a production site, includes: a manager (e.g., the manager 221, one or more server apparatuses 111, a circuit, a virtual machine, a container, etc.) that manages a stock quantity of consumable items used in each of the apparatuses, on a predetermined management aggregation (e.g., the factory, the production line, the machine type, etc.) basis; an obtainer (e.g., the obtainer 222, one or more server apparatuses 111, a circuit, a virtual machine, a container, etc.) that obtains consumable item information (e.g., information indicating the remaining amount, information indicating the usage start date, and information indicating the stock quantity) pertaining to a consumption degree of the consumable items used in each of the apparatuses, from each of the apparatuses; and a determiner (e.g., the determiner 223, one or more server apparatuses 111, a circuit, a virtual machine, a container, etc.) that determines necessity of replacement of any of the consumable items, based on the consumable item information about the consumable item obtained by the obtainer, wherein based on actual replacement of the consumable item determined to have the necessity of replacement by the determiner, the manager updates the stock quantity in a management aggregation to which the consumable item belongs (e.g., step S702).

The manager may update the stock quantity of the consumable item every time the consumable item is replaced. In a case in which multiple consumable items are used in one apparatus, the manager may update the stock quantities of the consumable items when the multiple consumable items are replaced together. In addition, every time the RF tag of the consumable item is read by the reader device 340, the apparatus 120 may automatically transmit the replacement information to the server apparatus 111. Based on a fact that the RF tab of each consumable item is read by the reader device 340, and the user performs an operation after reading multiple RF tags, the apparatus 120 may transmit, to the server apparatus 111, the replacement information that includes information on the multiple consumable items.

According to the configuration described above, for example, provided that the predetermined management aggregation is a production line, the stock quantities of consumable items can be managed on a production line basis. Consequently, in a case in which a plurality of apparatuses of the same type are arranged on the production line, the consumable items can be used among the apparatuses in a shared manner, thus allowing reduction in stock quantities in comparison with a case of managing the stock quantities on an apparatus-by-apparatus basis. Alternatively, for example, provided that the predetermined management aggregation is a factory, the stock quantities of consumable items can be managed on a factory-by-factory basis. Consequently, in a case in which a plurality of apparatuses of the same type are arranged in the factory, the consumable items can be used among the apparatuses in a shared manner, thus allowing reduction in stock quantities in comparison with cases of managing the stock quantities on an apparatus-by-apparatus basis or a production line basis.

(2)
The consumable item information about the consumable item obtained by the obtainer includes information indicating a date of starting usage of the consumable item (e.g., the usage start date 405), and if the determiner determines that a predetermined time period elapses after start of usage of the consumable item based on the consumable item information about the consumable item obtained by the obtainer, the determiner affirmatively determines the necessity of replacement of the consumable item (e.g., see step S601).

According to the configuration described above, for example, the consumable item each having an elapsed expiration date for use is replaced. Consequently, the stock quantities of the consumable items (ink, intensifier liquid, etc.) each having an expiration date for use, and the stock quantities of the consumable items (a filter, an O-ring, etc.) that become unable to play an originally intended role after continuous use of the apparatus can be appropriately managed.

(3)
The consumable information about the consumable item obtained by the obtainer includes information indicating a remaining amount of the consumable item (e.g., the remaining amount 407), and if the determiner determines that the remaining amount of the consumable item falls below a threshold based on based on the consumable item information about the consumable item obtained by the obtainer, the determiner affirmatively determines the necessity of replacement of the consumable item (e.g., see step S601).

According to the configuration described above, for example, the consumable items each having a remaining amount that falls below the threshold are replaced. Consequently, the stock quantities of the consumable items (ink, intensifier liquid, etc.) each having an amount decreasing with continuous use of the apparatus can be appropriately managed.

(4)
In the stock management system, the plurality of apparatuses each includes a reader device (e.g., the reader device 340) that can read information on an RF tag, if the reader device of the apparatus that uses a first consumable item determined to have the necessity of replacement by the determiner reads the information on the RF tag attached to a second piece of the consumable item to be used for replacement during actual replacement of the first piece of the consumable item, the reader device transmits, to the manager, replacement information (e.g., information on the consumable item ID, the apparatus ID, the production line ID, the usage start date, etc.) indicating that the first piece of the consumable item has been replaced with the second piece of the consumable item, and upon receipt of the replacement information, the manager decrements, by one, the stock quantity in a management aggregation to which the second piece of the consumable item belongs.

According to the configuration described above, for example, when the consumable item is replaced, the stock quantity is automatically updated. Consequently, update of the stock quantity can be prevented from being mistakenly skipped, and the stock quantity can be reliably managed.

(5)
The stock management system includes: a storage (e.g., the storage 224, one or more server apparatuses 111, a circuit, a virtual machine, a container, etc.) that stores information indicating an order quantity (e.g., the order quantity 505) of the consumable item, and information indicating a minimum stock quantity (e.g., the minimum stock quantity 504) of the consumable item, on the predetermined management aggregation basis; and an order placer (e.g., the order placer 225, one or more server apparatuses 111, a circuit, a virtual machine, a container, etc.) that performs an order placement process of transmitting, to a terminal at an order destination (e.g., the consumable item shipping system), order information (e.g., the order information, the consumable item ID, the order quantity, etc.) for placing an order, with the order quantity of the consumable item, for the consumable item having a quantity smaller than the minimum stock quantity, based on the information stored in the storage.

According to the configuration described above, for example, an order for the minimum order quantity of the consumable item required to be held in the factory is placed. Consequently, the stock quantity of each consumable item can be reduced.

(6)
The plurality of apparatuses each include an input and output device (e.g., the touch panel 330) that can input and output information pertaining to an order of the consumable item, the manager transmits, to the input and output device, instruction information (e.g., the order screen) for an instruction of whether to place an order for the consumable item having the stock quantity smaller than the minimum stock quantity or not, the input and output device displays the instruction information, and upon acceptance of an input for an instruction for placing an order for the consumable item, the input and output device transmits, to the order placer, information for placing the order of the consumable item, and upon receipt of the information for placing the order of the consumable item, the order placer performs the order placement process for the consumable item.

According to the configuration described above, for example, in a case or the like in which the production plan is changed and a quantity of the consumable item more than that in normal times is required, the user can place an order at timing as instructed, and the stock can be flexibly managed.

(7)
the storage stores information indicating an order date (e.g., the order date 506) of the consumable item, on the predetermined management aggregation basis, and when the order date of the consumable item is reached, the order placer performs the order placement process for the consumable item having the stock quantity smaller than the minimum stock quantity. (e.g., see step S801).

According to the configuration described above, for example, the order placement process is automatically performed on the date designated by the user. Consequently, the load of the order placement process on the user, erroneous order placement and the like can be reduced. The information indicating the order date of the consumable item may be information on a preset date, such as the first day on each month, or information on a date which is predicted by the stock management system and on which the stock quantity falls below the minimum stock quantity.

(8)
The stock management system includes: a storage (e.g., the storage 224, one or more server apparatuses 111, a circuit, a virtual machine, a container, etc.) that stores the consumable item information obtained by the obtainer; a predictor (e.g., the predictor 226, one or more server apparatuses 111, a circuit, a virtual machine, a container, etc.) that predicts a time at which the consumable item is required to be replaced, based on the consumable item information about the consumable item stored in the storage; and an order placer (e.g., the order placer 225, one or more server apparatuses 111, a circuit, a virtual machine, a container, etc.) that performs an order placement process for the consumable item, based on the time at which the consumable item is required to be replaced predicted by the predictor.

According to the configuration described above, for example, the order placement process is automatically performed before the stock quantity of the consumable item becomes zero. Consequently, the load of the stock management on the user can be reduced.

(9)
The stock management system further includes a billing issuer (e.g., the billing issuer 227, one or more server apparatuses 111, a circuit, a virtual machine, a container, etc.) that performs a billing process of transmitting billing information for charging a payment for the consumable item, to a terminal (e.g., the user terminal 150) of a user who is to receive the consumable item for which the order placement process has been performed by the order placer, or to the terminal (e.g., the consumable item billing system) at the order destination preliminarily registered with respect to the user.

According to the configuration described above, for example, the user or the billing destination designated by the user is automatically charged with payment for the consumable item. Consequently, the load of the billing operation by the service provider can be reduced, and a series of stock management operations can be executed with no delay.

(10)
For example, the industrial ink is an organic solvent, and upper limits based on legislative regulations may be imposed on some consumable items. In case of detection of the situation where the stock quantity exceeds the limitation of the legislative regulations, the manager may issue an alert. The timing of detection may be timing of setting an order rule by the user. A notification may be issued at timing of satisfying a condition where an excessive stock quantity occurs at automatic order placement due to predetermined situations (stock has not been consumed as estimated).

The configuration described above may be appropriately changed, modified, combined, or omitted within a range not exceeding the gist of the present invention.

It should be understood that items included in a list in a form of "at least one of A, B, and C" can mean (A), (B), (C), (A and B), (A and C), (B and C) or (A, B, and C) . Likewise, items listed in a form of "at least one of A, B, or C" can mean (A), (B), (C), (A and B), (A and C), (B and C) or (A, B, and C).

### [Reference Signs List]

100......Stock management system, 111......Server apparatus, 120......Apparatuses.

## Claims

1. A stock management system performing stock management of consumable items used in a plurality of apparatuses provided at a production site, the stock management system comprising:
a manager that manages a stock quantity of consumable items used in each of the apparatuses, on a predetermined management aggregation basis;
an obtainer that obtains consumable item information pertaining to a consumption degree of the consumable items used in each of the apparatuses, from each of the apparatuses; and
a determiner that determines necessity of replacement of any of the consumable items, based on the consumable item information about the consumable item obtained by the obtainer,
wherein based on actual replacement of the consumable item determined to have the necessity of replacement by the determiner, the manager updates the stock quantity in a management aggregation to which the consumable item belongs.

2. The stock management system according to claim 1,
wherein the consumable item information about the consumable item obtained by the obtainer includes information indicating a date of starting usage of the consumable item, and
if the determiner determines that a predetermined time period elapses after start of usage of the consumable item based on the consumable item information about the consumable item obtained by the obtainer, the determiner affirmatively determines the necessity of replacement of the consumable item.

3. The stock management system according to claim 1,
wherein the consumable item information about the consumable item obtained by the obtainer includes information indicating a remaining amount of the consumable item, and
if the determiner determines that the remaining amount of the consumable item falls below a threshold based on the consumable item information about the consumable item obtained by the obtainer, the determiner affirmatively determines the necessity of replacement of the consumable item.

4. The stock management system according to claim 1,
wherein the plurality of apparatuses each includes a reader device that can read information on an RF (Radio Frequency) tag,
if the reader device of the apparatus that uses a first consumable item determined to have the necessity of replacement by the determiner reads the information on the RF tag attached to a second piece of the consumable item to be used for replacement during actual replacement of the first piece of the consumable item, the reader device transmits, to the manager, replacement information indicating that the first piece of the consumable item has been replaced with the second piece of the consumable item, and
upon receipt of the replacement information, the manager decrements, by one, the stock quantity in a management aggregation to which the second piece of the consumable item belongs.

5. The stock management system according to claim 1, further comprising:
a storage that stores information indicating an order quantity of the consumable item, and information indicating a minimum stock quantity of the consumable item, on the predetermined management aggregation basis; and
an order placer that performs an order placement process of transmitting, to a terminal at an order destination, order information for placing an order, with the order quantity of the consumable item, for the consumable item having a quantity smaller than the minimum stock quantity, based on the information stored in the storage.

6. The stock management system according to claim 5,
wherein the plurality of apparatuses each include an input and output device that can input and output information pertaining to an order of the consumable item,
the manager transmits, to the input and output device, instruction information for an instruction of whether to place an order for the consumable item having the stock quantity smaller than the minimum stock quantity or not,
the input and output device displays the instruction information, and upon acceptance of an input for an instruction for placing an order for the consumable item, the input and output device transmits, to the order placer, information for placing the order of the consumable item, and
upon receipt of the information for placing the order of the consumable item, the order placer performs the order placement process for the consumable item.

7. The stock management system according to claim 5,
wherein the storage stores information indicating an order date of the consumable item, on the predetermined management aggregation basis, and
when the order date of the consumable item is reached, the order placer performs the order placement process for the consumable item having the stock quantity smaller than the minimum stock quantity.

8. The stock management system according to claim 1, further comprising:
a storage that stores the consumable item information obtained by the obtainer;
a predictor that predicts a time at which the consumable item is required to be replaced, based on the consumable item information about the consumable item stored in the storage; and
an order placer that performs an order placement process for the consumable item, based on the time at which the consumable item is required to be replaced predicted by the predictor.

9. The stock management system according to any one of claims 5 to 8, further comprising
a billing issuer that performs a billing process of transmitting billing information for charging a payment for the consumable item, to a terminal of a user who is to receive the consumable item for which the order placement process has been performed by the order placer, or to the terminal at the order destination preliminarily registered with respect to the user.

10. The stock management system according to claim 1,
wherein if the stock quantity on the predetermined management aggregation basis satisfies a condition against a legislative regulation about management of the consumable item, the manager issues an alert.

11. A stock management method performing stock management of consumable items used in a plurality of apparatuses provided at a production site, the stock management method causing:
a manager to manage a stock quantity of consumable items used in each of the apparatuses, on a predetermined management aggregation basis;
an obtainer to obtain consumable item information pertaining to a consumption degree of the consumable items used in each of the apparatuses, from each of the apparatuses; and
a determiner to determine necessity of replacement of any of the consumable items, based on the consumable item information about the consumable item obtained by the obtainer,
wherein based on actual replacement of the consumable item determined to have the necessity of replacement by the determiner, the manager updates the stock quantity in a management aggregation to which the consumable item belongs.
